# EUROPÄISCHE PATENTSCHRIFT

(11) **EP 0 367 044 B1**
(45) Veröffentlichungstag und Bekanntmachung des Hinweises auf die Patenterteilung: **26.05.1993**
(21) Anmeldenummer: 89119498.7
(22) Anmeldetag: 20.10.1989
(51) Int. Cl.: H02K 1/18

(54) **Horizontalachsige elektrische Maschine**
Electric machine with a horizontal axis
Machine électrique à axe horizontal

(30) Priorität: 01.11.1988 CH 4067/88
(43) Veröffentlichungstag der Anmeldung: 09.05.1990
(73) Patentinhaber: ASEA BROWN BOVERI AG, 5400 Baden (CH)
(72) Erfinder: Brem, Ernst, CH-8952 Schlieren (CH); Rohrer, Hansjürg, Dr., CH-5200 Brugg (CH)

(56) Entgegenhaltungen:
- EP-A- 0 166 114
- DE-C- 836 683
- GB-A- 1 117 651
- US-A- 2 953 697
- PATENT ABSTRACTS OF JAPAN vol. 7, no. 33 (E-157)(1178) 09 Februar 1983, & JP-A-57 186937
- SOVIET INVENTIONS ILLUSTRATED, DERWENT, London GB woche 8703, 210187 & SU-A-1234916.

## Beschreibung

Die Erfindung bezieht sich auf eine horizontalachsige elektrische Maschine gemäss dem Oberbegriff des Patentanspruchs 1.

Die Erfindung nimmt dabei Bezug auf einen Stand der Technik, wie er sich beispielsweise aus der DE-C-836683 ergibt.

### Technologischer Hintergrund und Stand der Technik

Bei gasgekühlten elektrischen Maschinen des oberen Leistungsbereichs treten grosse axiale und radiale Dehnungen im Statorblechkörper auf, welche auf das Gehäuse möglichst gleichmässig verteilt übertragen werden müssen.

Die deutsche Patentschrift 836 683 beschreibt eine horzintalachsige elektrische Maschine mit einem Statorblechkörper, der mittels über seinen gesamten Umfang verteilten Befestigungskeilen in wenigsten zwei senkrechten und gegenseitig beabstandeten ringförmigen Tragplatten verspannt ist. Die Tragplatten sind ihrerseits über annähernd gleichsinnig gerichtete und tangential zum Aussenumfang des Statorblechkörpers verlaufende flache, auf Zug beanspruchte Blattfedern mit dem Gehäuse der Maschine verbunden.

Bei einer anderen aus der SU-A-1234916, in Form eines DERWENT-Abstracts vorliegenden Konstruktion ist der rechteckige Statorblechkörper in einem gleichfalls rechteckigem Maschinengehäuse an allen Ecken mittels Federn aufgehängt.

Derartige Konstruktionen sind insbesondere bei grösseren elektrischen Maschinen vergleichsweise aufwendig.

### Kurze Darstellung der Erfindung

Ausgehend vom Bekannten liegt der Erfindung die Aufgabe zugrunde, eine horizontalachsige elektrische Maschine zu schaffen die ohne aufwendige Feder- und oder Abstützelemente auskommt und demgemäss einen einfachen und wirtschaftlichen Aufbau aufweist, aber gleichwohl "Federelemente" zwischen Statorblechkörper und Maschinenfundament aufweist.

Diese Aufgabe wurde bei einer horizontalachsigen elektrischen Maschine der eingangs genannten Gattung erfindungsgemäss dadurch gelöst, dass dass die Gehäusewandabschnitte zwischen den Befestigungsstellen als Federelemente fungieren.

Mit dieser konstruktiven Lösung wird eine federnde Abstützung des Statorblechkörpers gegenüber dem Fundament ohne eigentliche oder eigens dafür bestimmte Federelemente erzielt, indem die Gehäusewände bzw. die Gehäusewandabschnitte zwischen den Befestigungsteilen als Federelemente fungieren.

Neben zwei in der vertikalen Symmetrieebene diametral gegenüberliegenden Befestigungsstellen sind auch Anordnungen möglich, bei denen die untere in der horizontalen Symmetrieebene, die obere auf zwei Stellen aufgeteilt ist, die symmetrisch zur besagten Symmetrieebene um bis zu 45° gegenüber dieser geneigten Ebene angeordnet sind. Auch eine Anordnung mit zwei symmetrischen Befestigungsstellen unten und einer zentralen oben, oder mit je zwei symmetrischen Befestigungsstellen oben und unten ist möglich. In jedem Fall verbleibt ein genügend langer Wandabschnitt zwischen den Befestigungsstellen und den Gehäusetragteilen, der die erfindungsgemässe Federwirkung sicherstellt.

### Kurze Beschreibung der Zeichnung

In der Zeichnung, in der bevorzugte Ausführungsbeispiele der Erfindung dargstellt sind, zeigt
- Fig.1: einen vereinfachten Querschnitt durch den Stator einer elektrischen Maschine mit je einer Befestigungsstelle;
- Fig.2: eine erste Abwandlung der Aufhängung nach Fig. 1 mit einer unteren und zwei oberen Befestigungsstellen;
- Fig.3: eine zweite Abwandlung der Aufhängung nach Fig. 1 mit einer oberen und zwei unteren Befestigungsstellen;
- Fig.4: eine dritte Abwandlung der Aufhängung nach Fig. 1 mit je zwei unteren und zwei oberen Befestigungsstellen;
- Fig.5: einen Längsschnitt durch den Stator einer elektrischen Maschine in der vertikalen Symmetrieebene mit einer mehr ins Detail gehenden Darstellung der unteren und oberen Blechpaketaufhängung nach Fig. 1;
- Fig.6: einen Querschnitt durch den Stator nach Fig. 5 längs oberer Linie AA.

### Detaillierte Beschreibung der Erfindung

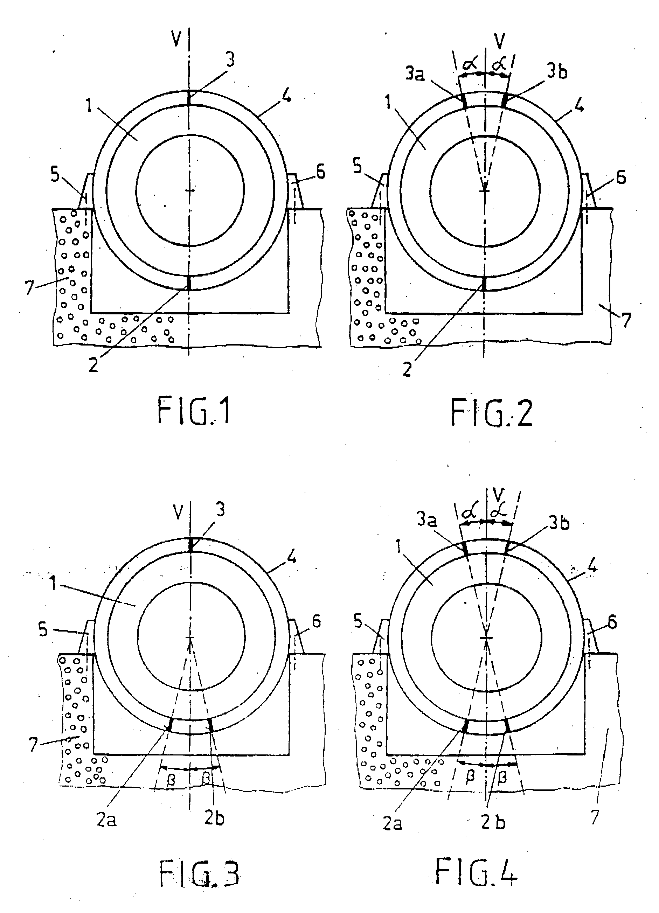

Im stark vereinfachten Querschnitt durch den Stator einer elektrischen Maschine gemäss Fig. 1 ist ein Statorblechkörper 1 über ein unteres 2 und ein oberes Befestigungsteil 3 in einem Gehäuse 4 angeordnet. Diese Befestigungsteile 2, 3 liegen in der vertikalen Symmetrieebene V der Maschine. Das Gehäuse 4 stützt sich über seitliche, im Bereich der horizontalen Symmetrieebene der Maschine angeordnete Gehäusefüsse 5,6 auf einem Fundament 7 ab und ist in bekannter Weise dort mit dem Fundament 7 verschraubt. Beim Betrieb der Maschine rotieren Magnetfelder mit der Frequenz der Drehzahl. Diese Felder versuchen den Statorblechkörper 1 (bei zweipoligen Maschinen in eine rotierende Ellipse, bei vierpoligen Maschinen in ein rotierendes Viereck, bei sechspoligen Maschinen in ein rotierendes Sechseck usw.) zu verwandeln. Diese Blechverformungen sind mit eine Ursache für magnetische Geräusche und Schwingungen des Statorgehäuses (vgl. DE-Buch Wiedemann/Kellenberger "Konstruktion elektrischer Maschinen" Springer-Verlag Berlin-Heidelberg-New York 1967, S. 337,338). Diese Verformungen werden über die Befestigungsteile 2, 3 auf das Gehäuse 4 übertragen und bewirken eine entsprechende periodische Verformung des Gehäusemantels. Weil nun der Gehäuseabschnitt zwischen den Befestigungsteilen 2,3 und den Gehäusefüssen 5,6 vergleichsweise sehr lang ist, wirkt er als Federelement zwischen den Befestigungsstellen des Statorblechkörpers 1 und Gehäuse 4 einerseits und den Gehäusefüssen 5 bzw. 6 andererseits, so dass seperate Federelemente entbehrlich sind und trotzdem eine federnde Abstützung des Statorblechkörpers 1 auf dem Fundament 7 verwirklicht ist.

Anstelle diametral gegenüberliegender Befestigungsstellen (Fig.1) ist bei der Variante gemäss Fig. 2 die obere Befestigung auf zwei Befestigungsteile 3a und 3b verteilt. Diese liegen symmetrisch zur Achse V und um den Winkel α gegenüber der Ebene V geneigt. Die Grösse des Winkels α liegt zwischen einem praktisch nur durch die Konstruktion der Befestigungsteile 3a,3b bestimmten Minimum und etwa 45°.

Bei der Anordnung nach Fig. 3 ist oben ein Befestigungsteil 3 in der vertikalen Symmetrieebene V und die untere Befestigungsstelle ist auf zwei Befestigungsteile 2a, 2b verteilt, die gegenüber der Ebene V um den Winkel β geneigt sind.

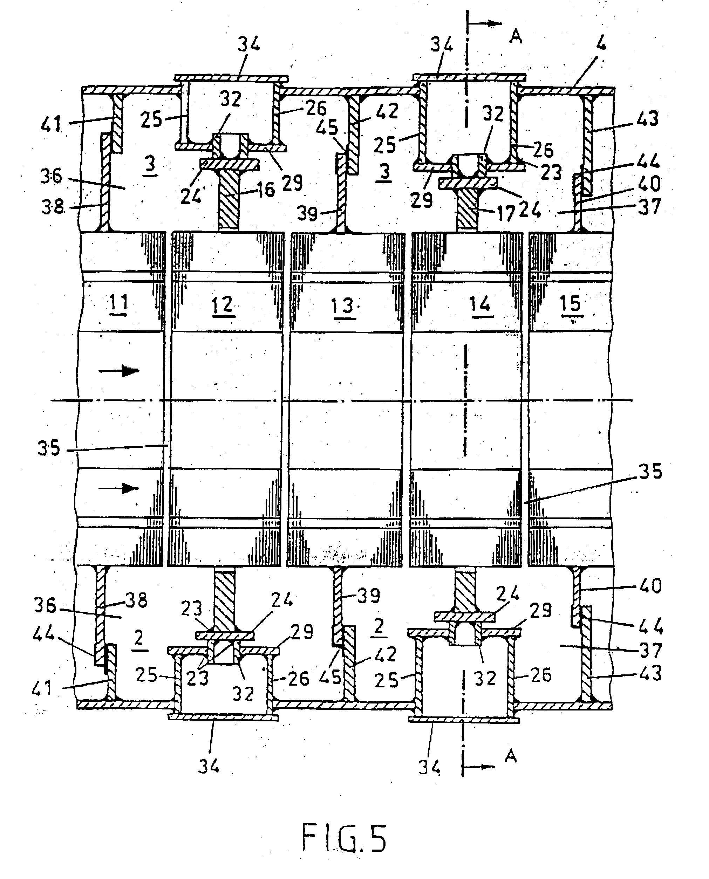

Fig.4 schliesslich zeigt eine Kombination der Anordnungen nach Fig. 2 und 3 mit je zwei Befestigungsteilpaaren 2a, 2b und 3a, 3b symmetrisch zur Ebene V.

Eine mehr ins Detail gehende Beschreibung der Erfindung unter Anwendung des im Zusammenhang mit Fig. 1 beschriebenen Konzepts wird nachfolgend gegeben.

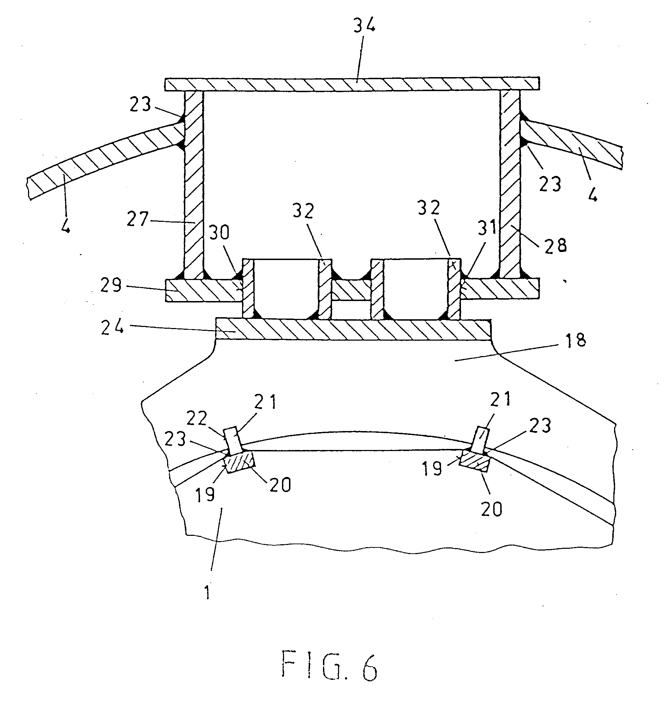

In Fig.5 und 6 ist der aus axial voneinander beabstandeten Teilblechpaketen 11,12,13,14,15 bestehender Statorblechkörper 1 in dem Gehäuse 4 unter Zwischenschaltung ringförmiger Tragplatten 16,17 und allgemein mit den Bezugszeichen 2,3 versehenen Befestigungsteilen aufgehängt. Wie in Fig.6 zu erkennen ist, erfolgt dabei die Aufhängung in der vertikalen Symmetrieebene der Maschine.

Die Tragplatten 16,17 weisen im Bereich der Befestigungsteile 2,3 seitliche (vertikal weisende) Erweiterungen 18 (Fig.6) auf.

Im Statorblechkörper 1 sind gleichmässig über seinen Aussenumfang verteilte Nuten 19 vorgesehen, in welchen Pressbolzen 20 mit beispielsweise rechteckigem Querschnitt liegen. Diese dienen zur axialen Verspannung des Statorblechkörpers 1.

Die Pressbolzen 20 sind unter Zwischenschaltung von Keilen 21 mit den ringförmigen Tragplatten 16 bzw. 17 verschweisst, wobei die Keile 21 in axialverlaufenden Schlitzen 22 in den Tragplatten 16 bzw. 17 liegen; die Schweissnähte sind dabei mit 23 bezeichnet.

Die Aufhängung der ringförmigen Tragplatten 16, 17 im Gehäuse 4 ist in allen wesentlichen Einzelheiten in Fig.5 veranschaulicht.

An die Erweiterungen 18 sind vertikal und axial verlaufende Befestigungsplatten 24 angeschweisst. Das Gehäuse 4 ist im Bereich dieser Befestigungsplatten 24 mit kastenförmigen Oeffnungen versehen, in welche ein einseitig offener Kasten eingeschweisst ist. Die vertikalen Kastenwände sind mit 25,26,27,28 bezeichnet. Der Kastenboden 29 verläuft annähernd planparallel zu den Befestigunsplatten 24. Jeder Kastenboden 29 weisst im Beispielsfall zwei kreisrunde Bohrungen 30,31 auf, durch welche vertikalachsige Rohrstücke 32,33 eingesetzt sind.

Diese sind sowohl mit den Befestigunsplatten 24 stumpf als auch im Kastenboden 29 verschweisst. Die Kästen sind je durch einen aufgeschraubten Deckel 34 verschlossen.

Weil das Einschweissen der Kästen in die Gehäusewand vor der (noch in beschreibender) Montage des Statorblechkörpers im Gehäuse erfolgt, sind alle diese Schweissstellen gut zugänglich und auch gut auf Dichtigkeit kontrollierbar.

Bei gasgekühlten elektrischen Maschinen ist der Raum zwischen Statorblechkörper 1 und Gehäuse 4 in mehrere, typisch mindestens drei Ringkammern unterteilt, welche der Zu- und Abfuhr des Kühlgases zum Stator bzw. zur Statorwicklung bzw. vom Rotor durch die Distanzen 35 zwischen den Teilblechpaketen 11,...,15 dient.

Diese Ringkammern - in Fig. 5 sind lediglich die zwei Ringkammern 36 und 37 sichtbar - durch radial verlaufende zweiteilige Trennwände gebildet. Jede Trennwand besteht dabei aus einem ersten Ring 38,39,40, der auf den Statorblechkörper 1 aufgeschweisst ist, und aus zweiten Ringen 41,42,43, die an die Innenwand des Gehäuses 4 angeschweisst sind. Die Ringe überlappen sich radial und sind im Ueberlappungsbereich durch einen elastischen Dichtring 44 mit U-Profil abgedichtet, der über die ersten Ringe gestülpt ist. Zusätzlich weist der Dichtring eine nach aussen weisende Dichtlippe 45 auf.

Um den gegebenenfalls schon mit der Statorwicklung versehenen Statorblechkörper 1 um das Gehäuse 4 in Axialrichtung einfahren zu können, liegen die Befestigungsplatten 24 und die zugehörigen Kastenböden 29 von der Einfahrseite gesehen auf immer kleineren Durchmessern. Gleiches gilt für die Aussendurchmesser der ersten Ringe 38,39,40 und die Innendurchmesser der zweiten Ringe 41,42,43. Dabei muss auch gewährleistet sein, dass der Aussendurchmesser auf der Höhe der Befestigunsplatte 24 an der Tragplatte 17 kleiner ist als der Innendurchmesser des Ringes 42 kleiner als der Abstand zwischen den sich diametral gegenüberliegenden Kastenböden 29, die der Tragplatte 16 zugeordnet sind.

Nur auf diese Weise ist sichergestellt, dass der Statorblechkörper 1 (im Beispielsfall von links nach rechts in Pfeilrichtung) in das Gehäuse 4 eingefahren werden kann.

Nach dem Einfahren des Statorblechkörpers 1 in das Gehäuse werden die beiden Maschinenteile gegeneinander ausgerichtet und provisorisch gegeneinander verspannt. In die Bohrungen 30,31 werden entsprechend abgelängte Rohrstücke 32,33 eingesetzt und zunächst an die Befestigungsplatten 24 stumpf angeschweisst, wobei die Schweissnähte 23 am Innenumfang der Rohrstücke liegen. Das Verschweissen der Rohrstücke am Kastenboden 29 (und damit am Gehäuse) erfolgt am Aussenumfang der Rohrstücke 32,33. Diese Befestigungsart, die grundsätzlich Gegenstand der EP-PS 0 166 114 ist, bietet absolut keine Toleranzprobleme. Eventuell vorhandene axiale Toleranzen bei den ersten und zweiten Ringen werden durch die axiale Elastizität der Dichtungen 44 aufgenommen.

Die Erfindung ist selbstverständlich nicht auf Befestigungsteile 2,3 nach der EP-PS 0 166 114 beschränkt.

Verzichtet man auf die Möglichkeit den Statorkörper als Ganzes in das Gehäuse einzuschieben, kann auch das Abstufen der Befestigungsteile 2,3 und der Ringe 38,...,43 entfallen.

## Patentansprüche

1. Horizontalachsige elektrische Maschine mit einem Statorblechkörper (1), der mittels über seinen gesamten Umfang verteilten Befestigungskeilen (21) in wenigstens zwei senkrechten und gegenseitig beabstandeten ringförmigen Tragplatten (16,17) verspannt ist, welche Tragplatten ihrerseits über Befestigungsteile (2,3) mit dem Gehäuse (4) der Maschine verbunden sind, und wobei die die Tragplatten (16,17) und das Gehäuse (14) verbindenden Befestigunsteile (2,3,...) nur annähernd in oder symmetrisch zu der vertikalen Symmetrieebene (V) der Maschine an den unteren und oberen Enden der Tragplatten (16,17) angeordnet sind und das Maschinengehäuse (14) über seitliche, im wesentlichen nur im Bereich der horizontalen Symmetrieebene des Maschinengehäuses angeordnete Gehäusetragteile (5,6) auf dem Fundament (7) abgestützt ist, dadurch gekennzeichnet, dass die Gehäusewandabschnitte zwischen den Befestigungsstellen als Federelemente fungieren.

2. Maschine nach Anspruch 1, dadurch gekennzeichnet, dass paarig angeordnete Befestigungsteile (2a,2b;3a,3b) am unteren und/oder oberen Ende der Tragplatten (16,17) vorgesehen sind.

3. Maschine nach Anspruch 2, dadurch gekennzeichnet, dass die Befestigungsteile (2a,2b;3a,3b) symmetrisch zur vertikalen Symmetrieebene (V) und gegenüber dieser um einen Winkel (α bzw. β) geneigt angeordnet und, wobei beide Winkel zwischen wenigen, konstruktionsbedingten Winkelgraden und maximal 60° liegen.

4. Maschine nach einem der Ansprüche 1 bis 3, dadurch gekennzeichnet, dass die ringförmigen Tragplatten (16,17) im Bereich der vertikalen Symmetrieebene (V) mit einer Erweiterung (18) versehen sind, an welche eine horizontal und axial verlaufende Befestigungsplatte (24) angeschweisst ist, die Befestigungsplatte (24) mit vertikalachsigen Rohrstücken (32,33) verschweisst und diese Rohrstücke wiederum mittel- oder unmittelbar mit dem Gehäuse (4) verschweisst sind.

5. Maschine nach Anspruch 4, dadurch gekennzeichnet, dass die Befestigung zwischen Gehäuse (4) und den Befestigungsplatten (24) am Boden kastenartiger Einbuchtungen im Maschinengehäuse (4) erfolgt.

6. Maschine nach einem der Ansprüche 1 bis 5, dadurch gekennzeichnet, dass die an den ringförmigen Tragplatten (16,17) befestigten Befestigungsplatten (24) auf unterschiedlichen Durchmessern liegen, die von einem Maschinenende aus gesehen zum anderen Ende abgestuft kleiner sind, dass dementsprechend die zugehörigen Befestigungspunkte am Gehäuse (4) gleichermassen abgestuft sind.

7. Maschine nach einem der Ansprüche 1 bis 6, dadurch gekennzeichnet, dass zwischen einzelnen Befestigungsteilen (2,3) radiale Querwände vorgesehen sind, welche den Ringraum zwischen Statorblechkörper (1) und Gehäuse (4) in einzelne Kammern (36,37) unterteilen.

8. Maschine nach Anspruch 7, dadurch gekennzeichnet, dass die Querwände je zweiteilig ausgebildet sind und aus einem ersten Ring (38,39,40), der am Statorkörper (1) befestigt ist, und einem zweiten Ring (41,42,43), der am Gehäuse (4) befestigt ist, bestehen, wobei sich die freien Ringenden überlappen und an der Ueberlappungsstelle eine zumindest in Axialrichtung elastische Dichtung (44) vorgesehen ist, und wobei vom anderen Maschinenende aus gesehen die Aussendurchmesser der ersten Ringe (38,39,40) jeweils kleiner sind als der Innendurchmesser des ihm benachbarten zweiten Ringes (41,42,43).

## Claims

1. Electrical machine with horizontal axis, comprising a laminated stator core (1) which is clamped in at least two vertical and mutually spaced-apart annular support plates (16, 17) by means of mounting wedges (21) distributed over its entire circumference, which support plates, in turn, are joined to the housing (4) of the machine via mounting parts (2, 3), and it being the case that the mounting parts (2, 3,...) joining the support plates (16, 17) and the housing (14) [sic] are arranged only approximately in or symmetrically with respect to the vertical plane of symmetry (V) of the machine at the lower and upper ends of the support plates (16, 17) and the machine housing (14) [sic] is supported on the foundation (7) via lateral housing support parts (5, 6), which are essentially only arranged in the area of the horizontal plane of symmetry of the machine housing, characterised in that the housing wall sections between the mounting parts act as spring elements.

2. Machine according to Claim 1, characterised in that mounting parts (2a, 2b; 3a, 3b) arranged in pairs are provided at the lower and/or upper end of the support plates (16, 17).

3. Machine according to Claim 2, characterised in that the mounting parts (2a, 2b; 3a, 3b) are arranged symmetrically with respect to the vertical plane of symmetry (V) and inclined by an angle (α or β) with respect to the latter, and both angles are located between a few degrees of angle dependent on design and a maximum of 60°.

4. Machine according to one of Claims 1 to 3, characterised in that the annular support plates (16, 17) are provided in the area of the vertical plane of symmetry (V) with an extension (18) to which a horizontally and axially extending mounting plate (24) is welded, the mounting plate (24) is welded to tube sections (32, 33) with vertical axis and these tube sections, in turn, are directly or indirectly welded to the housing (4).

5. Machine according to Claim 4, characterised in that the mounting between housing (4) and the mounting plates (24) is effected at the bottom of box-like indentations in the machine housing (4).

6. Machine according to one of Claims 1 to 5, characterised in that the mounting plates (24) attached to the annular support plates (16, 17) have different diameters which, seen from one machine end, are stepped smaller towards the other end and the associated mounting points at the housing (4) are correspondingly similarly stepped.

7. Machine according to one of Claims 1 to 6, characterised in that between individual mounting parts (2, 3) radial transverse walls are provided which subdivide the annular space between laminated stator core (1) and housing (4) into individual chambers (36, 37).

8. Machine according to Claim 7, characterised in that the transverse walls are in each case constructed of two parts and consist of a first ring (38, 39, 40) which is attached to the stator body (1) and a second ring (41, 42, 43) which is attached to the housing (4), in which arrangement the free ring ends overlap and a seal (44), which is elastic at least in the axial direction, is provided at the overlap, and, seen from the other machine end, the outside diameters of the first rings (38, 39, 40) are in each case smaller than the inside diameter of the second ring (41, 42, 43) adjacent to it.

## Revendications

1. Machine électrique à axe horizontal avec un corps de stator feuilleté (1), qui est encastré dans au moins deux plaques d'appui annulaires (16, 17) verticales et écartées l'une de l'autre, au moyen de clavettes de fixation (21) réparties sur tout son pourtour, plaques d'appui qui sont de leur côté reliées à la carcasse (4) de la machine par des pièces de fixation (2, 3) et où les pièces de fixation (2, 3, ...) reliant les plaques d'appui (16, 17) et la carcasse (14) ne sont disposées qu'approximativement dans le ou symétriquement par rapport au plan de symétrie vertical (V) de la machine aux extrémités inférieure et supérieure des plaques d'appui (16, 17) et où la carcasse (4) de la machine est supportée sur la fondation (7) par des pièces latérales (5, 6) de support de la carcasse disposées essentiellement uniquement dans la région du plan de symétrie horizontal de la carcasse de la machine, caractérisée en ce que les tronçons de paroi de la carcasse situés entre les points de fixation jouent le rôle d'éléments élastiques.

2. Machine suivant la revendication 1, caractérisée en ce que des pièces de fixation (2a, 2b; 3a, 3b) disposées par paires sont prévues à l'extrémité inférieure et/ou supérieure des plaques d'appui (16, 17).

3. Machine suivant la revendication 2, caractérisée en ce que les pièces de fixation (2a, 2b; 3a, 3b) sont disposées symétriquement par rapport au plan de symétrie vertical (V) et sont inclinées par rapport à celui-ci d'un angle (α respectivement β) et où les deux angles sont compris entre un petit nombre de degrés requis par la construction et un maximum de 60 degrés.

4. Machine suivant l'une ou l'autre des revendications 1 à 3, caractérisée en ce que les plaques d'appui annulaires (16, 17) sont, dans la région du plan de symétrie vertical (V), pourvues d'une extension (18) à laquelle est soudée une plaque de fixation horizontale et axiale (24), en ce que la plaque de fixation (24) est soudée à des pièces tubulaires (32, 33) à axe vertical et en ce que ces pièces tubulaires sont à nouveau soudées directement ou indirectement à la carcasse (4).

5. Machine suivant la revendication 4, caractérisée en ce que la fixation entre la carcasse (4) et les plaques de fixation (24) est réalisée au fond de boîtes en forme de caissons dans la carcasse (4) de la machine.

6. Machine suivant l'une ou l'autre des revendications 1 à 5, caractérisée en ce que les plaques de fixation (24) fixées aux plaques d'appui annulaires (16, 17) se trouvent à différents diamètres qui, vus d'une extrémité de la machine vers l'autre extrémité, sont graduellement plus petits et en ce que de ce fait les points correspondants de fixation sur la carcasse (4) sont uniformément étagés.

7. Machine suivant l'une ou l'autre des revendications 1 à 6, caractérisée en ce qu'entre les diverses pièces de fixation (2, 3), il est prévu des parois transversales radiales qui subdivisent en plusieurs chambres (36, 37) l'espace annulaire entre le corps de stator feuilleté (1) et la carcasse (4).

8. Machine suivant la revendication 7, caractérisée en ce que les parois transversales sont chacune en deux parties et se composent d'un premier anneau (38, 39, 40) qui est fixé au corps de stator (1) et d'un second anneau (41, 42, 43) qui est fixé à la carcasse (4), avec la circonstance que les bords libres des anneaux se recouvrent et qu'il est prévu, à l'endroit du recouvrement, un joint (44) élastique au moins en direction axiale et que, vus de l'autre extrémité de la machine, les diamètres extérieurs respectifs des premiers anneaux (38, 39, 40) sont plus petits que les diamètres intérieurs respectifs de leurs seconds anneaux (41, 42, 43) voisins.
